# EUROPEAN PATENT SPECIFICATION

(11) **EP 2 692 480 B1**
(45) Date of publication and mention of the grant of the patent: **26.09.2018**
(21) Application number: 13170767.1
(22) Date of filing: 06.06.2013
(51) Int. Cl.: B23P 15/34, B24B 9/16, B23B 27/20

(54) **Method of manufacturing an endmill tool**
Verfahren zur Herstellung eines Fräswerkzeugs
Procédé de fabrication d'un outil de fraisage

(30) Priority: 31.07.2012 KR 20120084002
(43) Date of publication of application: 05.02.2014
(73) Proprietor: Cha, In-Sun, Seoul 156-841 (KR)
(72) Inventor: Cha, In-Sun, Seoul 156-841 (KR); Cha, Soo-II, Seoul 156-020 (KR); Jang, Dong-Bin, Incheon 405-220 (KR)
(74) Representative: Witte, Weller & Partner Patentanwälte mbB

(56) References cited:
- GB-A- 2 442 135
- JP-A- H02 292 109
- JP-A- H11 207 516
- US-A1- 2005 121 417

## Description

### BACKGROUND OF THE INVENTION

### 1. Field of the Invention

The present invention relates to a method of manufacturing an endmill tool. In more detail, the present invention relates to a method of manufacturing an endmill tool, in which a natural diamond gemstone having a single crystal is abraded and ground in the state that the natural diamond gemstone is sequentially welded with sub-bodies, the alignment state of a machining tip temporarily installed in a super hard body is adjusted, and a machining tip is bonded with a super hard body by using a normal-temperature bonding agent, thereby minimizing the interference in the abrading and grinding processes, and preventing the waste of the cost resulting from the machining error and the machining failure, so that the reliability of the machining process can be ensured.

### 2. Description of the Related Art

In general, a diamond endmill tool is a kind of a milling cutter to machine a workpiece by using cutting blades formed at the front end portion and an outer peripheral portion.

In most conventional diamond endmill tools having the above structure, a polycrystalline diamond (PCD) is welded with the end portion of each blade and machined.

However, when the machining tip of the endmill tool is formed through an abrading or grinding process, a body having the machining tip fixed thereto interferes with a grinding wheel, which machines the cutting blade, within a machining range, so that difficulties are made in an abrading process or a grinding process.

In addition, when the machining tip is welded with the body installed in equipment, a welding solution having the high temperature flows, so that the dimension of the machining tip may slightly vary.

In addition, when the machining tip is not accurately aligned, the runout of the endmill tool is not accurately matched due to the alignment error, so that the reproducibility of products may be lowered.

GB 2 442 135 A which shows the closest prior art, discloses polycrystalline diamond composites; further it discloses a method of manufacturing an endmill tool. JPH02292109 A discloses a cylindrical end mill main frame. JP H11 207516 A discloses a throwaway tip for a throwaway ball end mill coated with a hard film. US 2005/0121417 A1 discloses brut polishing of superhard materials.

### SUMMARY OF THE INVENTION

The object of the present invention is to provide a method of manufacturing an endmill tool according to claim 1, in which the reference surface and the base surface of a natural diamond material having a single crystalline structure are formed through an abrading process, and the process of grinding the edge portion of a machining tip in the round shape or the rectangular shape is subsequently performed, thereby enhancing the degree of the machining precision of the machining tip, the machining tip can be manufactured by utilizing existing equipment, so that the manufacturing cost can be reduced, and the interference can be minimized in the abrading and grinding processes.

Another object of the present invention is to provide a method of manufacturing an endmill tool, in which the assembly of the machining tip and the metallic film, which are welded with each other, is bonded to the super hard body in the state that the assembly of the machining tip and the metallic film is installed in a sub-body, and the alignment state of the machining tip, which is bonded with the super hard body, on X, Y, and Z axes can be checked. In addition, if the alignment error occurs, the machining tip is finely adjusted, so that the alignment error value can be compensated. Accordingly, a worker can check the tool state before performing a machining work, so that the waste of the cost resulting from the machining error and the machining failure can be prevented, thereby ensuring the reliability of the machining process.

In order to accomplish the above objects of the present invention, there is provided a method of manufacturing an endmill tool according to claim 1. The method includes a machining preparing step of detecting a crystal direction of a selected natural diamond gemstone by inspecting a structure of the selected natural diamond gemstone, an abrading step of forming a lower base surface and an upper reference surface of the natural diamond gemstone by using an abrading equipment after welding the natural diamond gemstone with a first sub-body, an grinding step of grinding an edge portion of the natural diamond gemstone by using a grinding equipment after welding a machining tip, which is separated from the first sub-body, with a second sub-body to complete the machining tip having a cutting blade, and a setting step of temporarily installing the machining tip, which is separated from the second sub-body, in a super hard body installed in a setting equipment, adjusting an alignment state of the machining tip, and bonding the machining tip with the super hard body by using a normal-temperature bonding agent through a normal-temperature coagulation scheme to complete the endmill tool.

In this case, preferably, the abrading step includes a basic surface abrasion step of forming a basic surface by abrading a top surface of the natural diamond gemstone after welding the natural diamond gemstone with a first-first sub-body, a base surface abrasion step of forming a base surface by abrading a bottom surface of the natural diamond gemstone after welding the basic surface of the natural diamond gemstone, which is separated from the first-first sub-body, with a first-second sub-body, and a reference surface abrasion step of forming a reference surface by abrading the basic surface after welding the base surface of the natural diamond gemstone, which is separated from the first-second sub-body, with a first-third sub-body.

Further, preferably, the setting step includes a body installing step of installing the super hard body in the setting equipment, a film welding step of welding a metallic film with a lower end of the machining tip, a fixing step of inserting an assembly of the machining tip and the metallic film into the super hard body installed in the setting equipment, an adjusting step of adjusting an alignment error of the machining tip by monitoring alignment states of a front surface, a top surface, and a lateral side of the machining tip, and a bonding step of bonding the assembly of the machining tip having the adjusted alignment error and the metallic film with the super hard body by using the normal-temperature bonding agent at a normal temperature.

In addition, preferably, the adjusting step includes an X axis inspection step of photographing a front surface image of the machining tip coupled with a coupling portion and displaying the alignment state of the front surface of the machining tip to an outside, a Y axis inspection step of photographing a top surface image of the machining tip and displaying the alignment state of the top surface of the machining tip to the outside, and a Z axis inspection step of photographing a lateral side image of the machining tip and displaying the alignment state of the lateral side of the machining tip to the outside.

Further, preferably, the method further includes a cutting step of removing a protrusion of the metallic film protruding out of the machining tip after the bonding step.

Additionally, preferably, the method further includes a direction changing step of rotating the endmill tool by 90° in order to photograph the lateral side image of the machining tip after the Y axis inspection step.

In addition, preferably, the method further includes a primary washing step of removing an ingredient of a welding solution adhering to the natural diamond gemstone by using an acid solution after the basic surface abrasion step, a secondary washing step of removing an ingredient of a welding solution adhering to the natural diamond gemstone by using an acid solution after the base surface abrasion step, and a tertiary washing step of removing an ingredient or residues of a welding solution adhering to the natural diamond gemstone, which is separated from the first-third sub-body, by using an acid solution after the reference surface abrasion step.

In addition, preferably, the method further includes a quanternary washing step of removing an ingredient of a welding solution adhering to the natural diamond gemstone by using an acid solution after the grinding step.

Further, preferably, the method further includes a final inspection step of inspecting a manufacturing degree of the endmill tool after the setting step.

As described above, according to the present invention, after forming the reference surface and the base surface of the natural diamond material having a single crystalline structure through the abrasion process, the process of grinding the edge portion of the machining tip in the round shape or the rectangular shape is subsequently performed, thereby enhancing the degree of the machining precision of the machining tip, and the machining tip can be manufactured by utilizing existing equipment, so that the manufacturing cost can be reduced.

In addition, the 3D-shaped round groove or rectangular groove can be machined or the sharp edge portion can be obtained through a mechanical machining process, so that the present invention can more increase an economical advantage or the work efficiency when comparing with those of a semiconductor manufacturing process technology.

In addition, after welding the metallic film and the machining tip installed in the sub-body with each other, the assembly of the metallic film and the machining tip are bonded with the super hard body through a normal-temperature coagulation scheme, so that the interference can be minimized when performing an abrading or grinding process to form the machining tip.

Further, the alignment state of the machining tip on X, Y, and Z axes can be checked. If the alignment error occurs, the machining tip is finely adjusted, so that the alignment error value can be compensated. Accordingly, the waste of the cost resulting from the machining error and the machining failure can be prevented, so that the reliability of the machining process can be ensured.

### BRIEF DESCRIPTION OF THE DRAWINGS

FIG. 1 is a block diagram sequentially showing steps constituting a method of manufacturing an endmill tool according to the present invention.
FIG. 2 is a block diagram sequentially a setting step in the method of manufacturing the endmill tool according to the present invention.
FIG. 3 is a view showing the welding state of a natural diamond gemstone to the first sub-body in the method of manufacturing the endmill tool according to the present invention.
FIG. 4 is a view showing the abrading process to form base and reference surfaces of the natural diamond gemstone by using abrading equipment in the method of manufacturing the endmill tool according to the present invention.
FIG. 5 is a view showing the welding state of the natural diamond gemstone, which has been completely subject to the abrading process, to the sub-body in the method of manufacturing the endmill tool according to the present invention.
FIG. 6 is a view showing the state that the second sub-body welded with the natural diamond gemstone is installed in grinding equipment in the method of manufacturing the endmill tool according to the present invention.
FIG. 7 is a view showing the state that the machining tip, which has been completely subject to the grinding process, is bonded to the super hard body installed in setting equipment in the method of manufacturing the endmill tool according to the present invention.
FIG. 8 is a view showing the endmill tool, which has been completely set up, in the method of manufacturing the endmill tool according to the present invention.
FIG. 9 is a sectional view showing the endmill tool, which has been completely set up, in the method of manufacturing the endmill tool according to the present invention.
FIG. 10a illustrates the cutting blade of the machining tip, which is machined in the round shape, and the workpiece machined by using the machining tip in the method of manufacturing the endmill tool according to the present invention.
FIG. 10b illustrates the cutting blade of the machining tip, which is machined in the rectangular shape, and the workpiece machined by using the machining tip in the method of manufacturing the endmill tool according to the present invention.

### DETAILED DESCRIPTION OF THE INVENTION

Hereinafter, an exemplary embodiment of the present invention will be described in detail with reference to accompanying drawings.

The advantages, the features, and schemes of achieving the advantages and features will be apparently comprehended by those skilled in the art based on the embodiments, which will be described later in detail, with reference to accompanying drawings.

The present invention is not limited to the following embodiments, but includes various applications and modifications. The embodiments will make the disclosure of the present invention complete, and allow those skilled in the art to completely comprehend the scope of the present invention. The present invention is defined only by the scope of the appended claims.

If it is determined that description about well known functions or configurations may make the subject matter of the present invention unclear, the details thereof will be omitted.

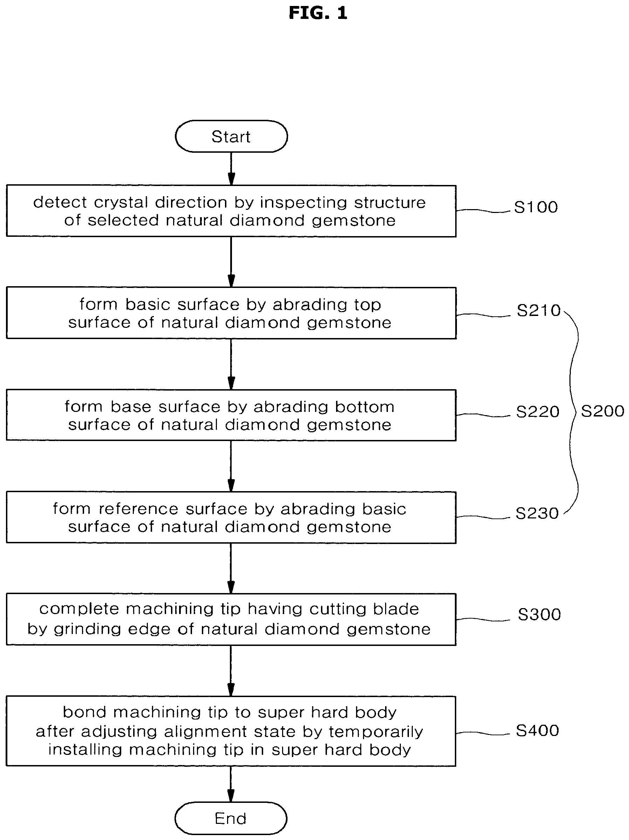

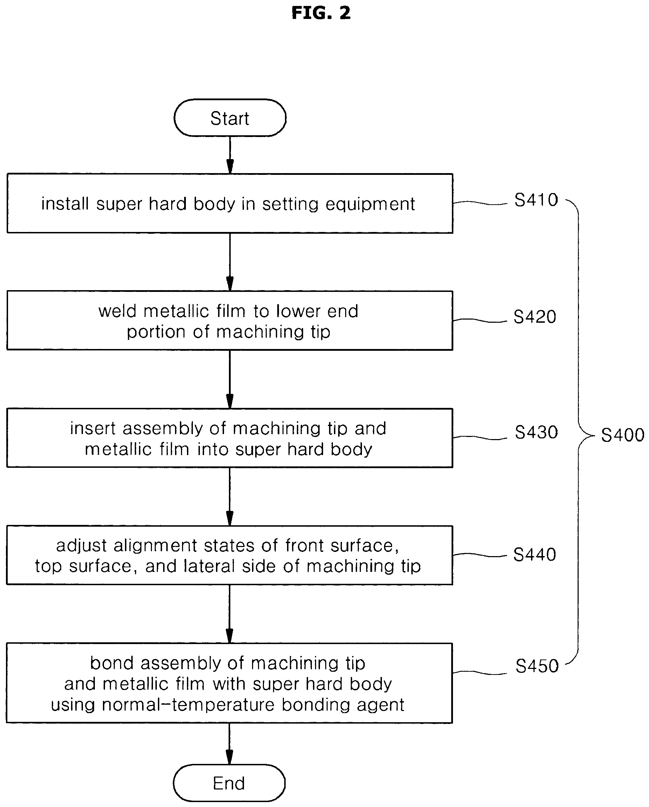

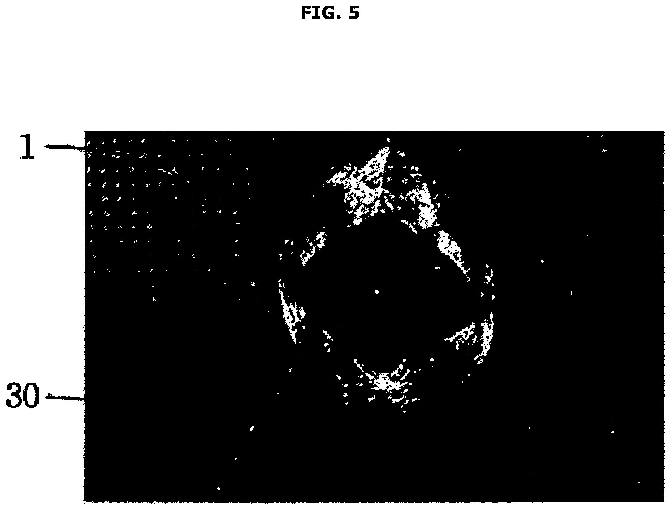

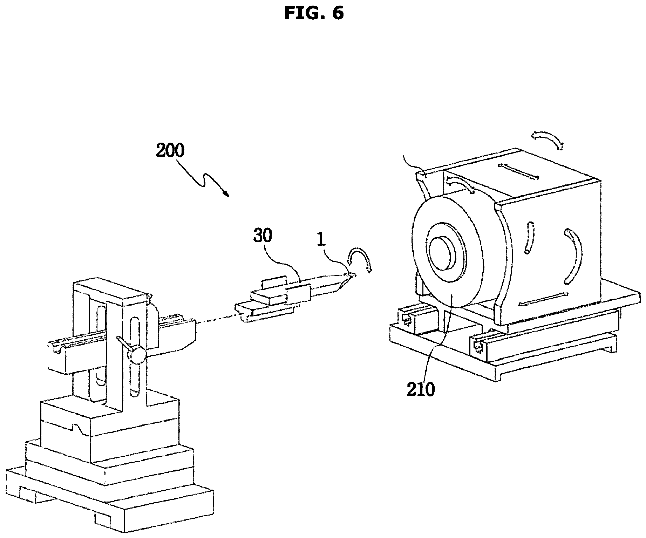

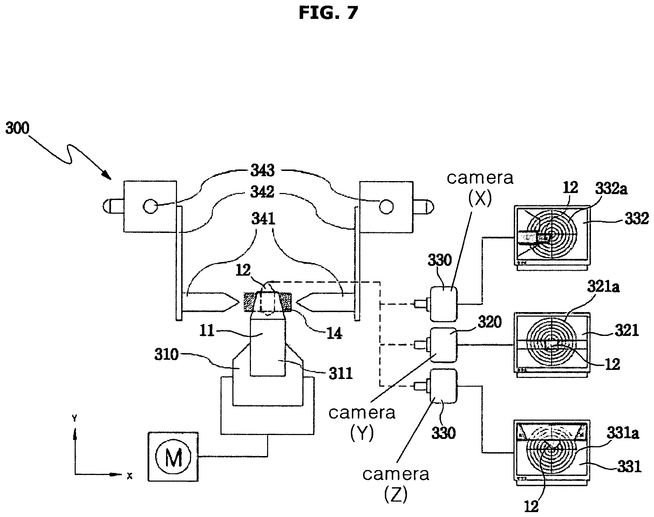

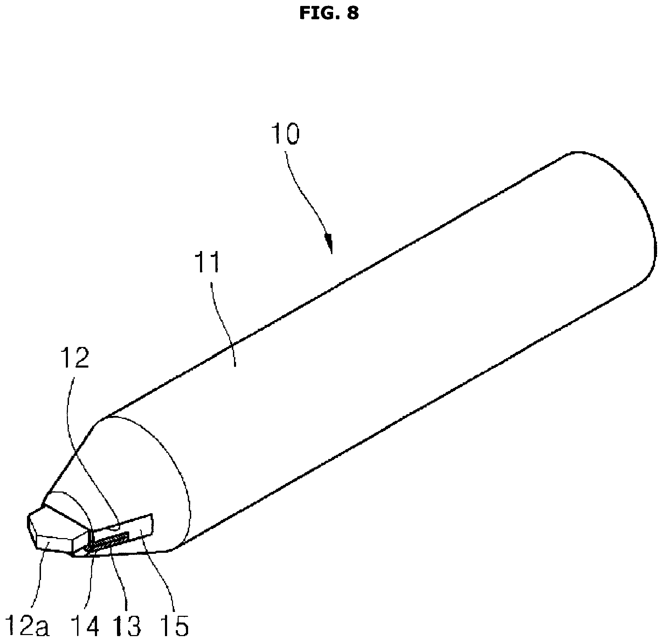

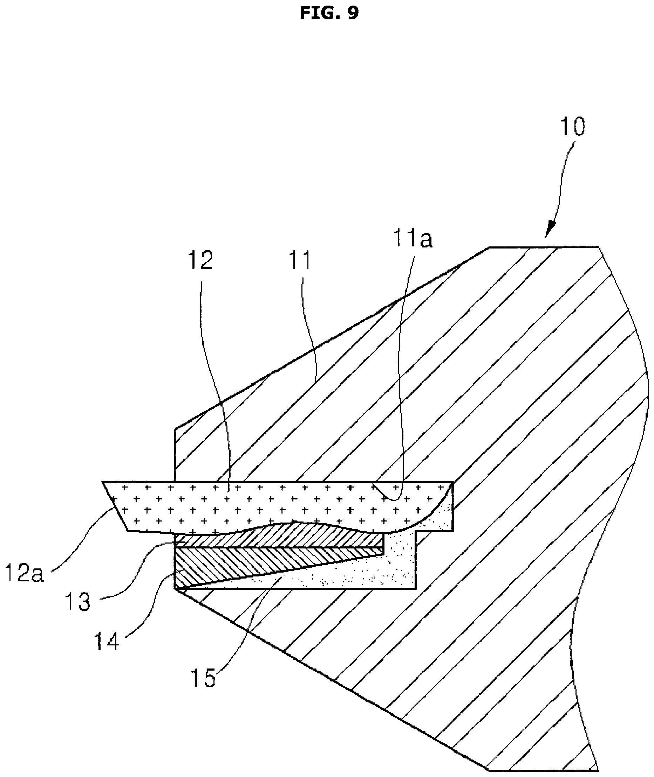

As shown in FIGS. 1 to 9, a method of manufacturing an endmill tool according to the present invention includes a machining preparing step S100, an abrading step S200, a grinding step S300, and a setting step S400.

First, according to the machining preparing step S100, the crystal direction of a selected natural diamond gemstone 1 is detected by inspecting the structure of the selected natural diamond gemstone.

In other words, the machining preparing step S100 is the most fundamental and important process to determine the optimal working process as well as a grinding direction of the natural diamond gemstone 1.

In addition, the method of manufacturing the endmill tool may further include a step of selecting the natural diamond gemstone 1 to be machined for a machining tip 12 before the machining preparing step S100 is performed.

The machining preparing step S100 is a process to detect the fundamental information of the natural diamond gemstone 1 before the natural diamond gemstone 1 is machined because the crystal of the natural diamond gemstone 1 has the anisotropy.

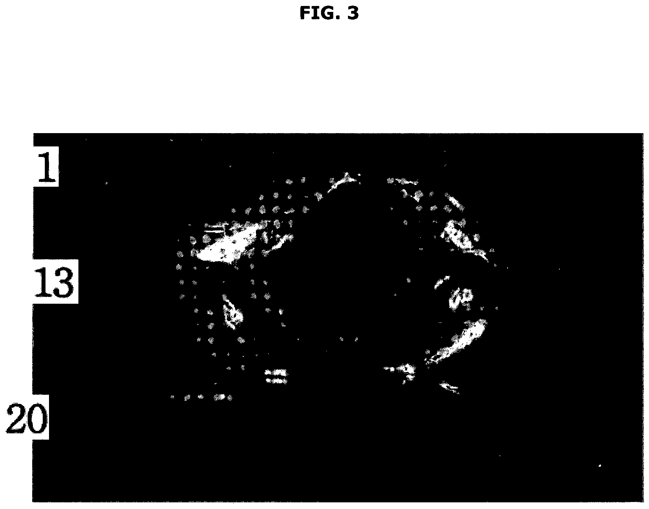

Next, as shown in FIG. 3, in the abrading step S200, the natural diamond gemstone 1, in which the anisotropy thereof is detected, is welded with first sub-bodies 20a, 20b, and 20c.

Thereafter, according to the abrading step S200, a base surface 12a and a reference surface 12b serving as the bottom and top surfaces of the natural diamond gemstone 1, respectively, are formed by using an abrading member 110 of abrading equipment 100.

In this case, when the natural diamond gemstone 1 may be welded with the first sub-bodies 20a, 20b, and 20c, the natural diamond gemstone 1 may be welded through an electric resistance welding scheme performed by melting a metallic foil containing a great amount of silver or a welding agent 13 in the state of a paste.

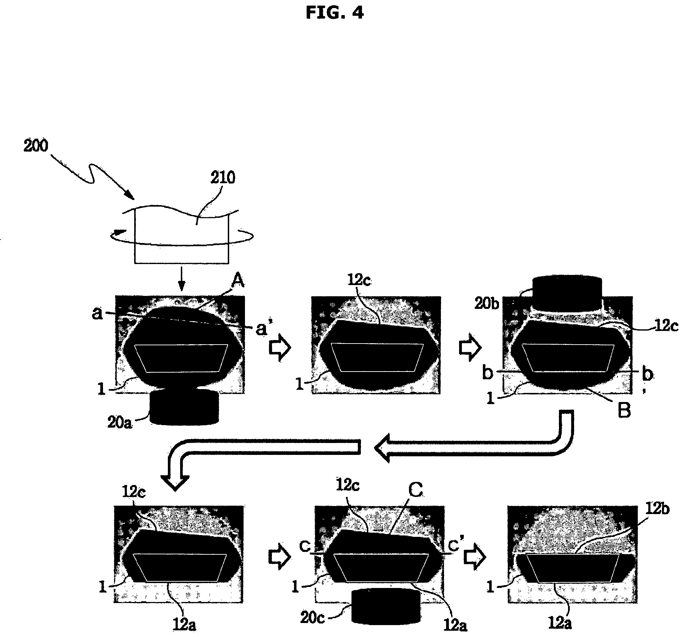

As shown in FIG. 4, the abrading step S200 includes a basic surface abrasion step S210, a basic surface abrasion step S220, and a reference surface abrasion step S230.

First, according to the basic surface abrasion step S210, after welding the natural diamond gemstone 1 with the first-first sub-body 20a, the top surface of the natural diamond gemstone 1 is abraded to form a basic surface 12c.

According to the base surface abrasion step S220, after welding the basic surface 12c of the natural diamond gemstone 1, which has been separated from the first-first sub-body 20a, with a first-second sub-body 20b, the bottom surface of the natural diamond gemstone 1 is abraded by the abrading member 110 of the abrading equipment 100 to form the base surface 12a.

According to the reference surface abrasion step S230, after welding the base surface 12a of the natural diamond gemstone 1, which has been separated from the first-second sub-body 20b, with the first-third sub-body 20c, the basic surface 12c is abraded by using the abrading member 110 of the abrading equipment 100 to form the reference surface 12a.

In more detail, as shown in FIG. 4, before grinding the reference surface 12b, a part A (line a-a') of the natural diamond gemstone 1 welded with the first-first sub-body 20a is ground in order to make a foundation plane.

Next, the natural diamond gemstone 1 is separated from the first-first sub-body 20a by melting the welding agent 13 used to weld the natural diamond gemstone 1 with the first-first sub-body 20a.

In addition, the base surface 12a is formed by abrading a part B (line b-b') after welding the basic surface 12c of the natural diamond gemstone 1 with the first-second sub-body 20b.

Thereafter, after welding the base surface 12a of the natural diamond gemstone 1 with the first-third sub-body 20c, a part C (line c-c') having the basic surface 12c may be abraded to form the reference surface 12b at the top surface of the natural diamond gemstone 1.

After the abrading step S200 described above, the method may further include a primary washing step of removing the ingredients or residues of the welding solution adhering to the natural diamond gemstone 1 separated from the first-first sub-body 20a by using an acid solution.

Further, the method may further include a secondary washing step of removing the ingredients or residues of the welding solution adhering to the natural diamond gemstone 1 separated from the first-second sub-body 20b by using an acid solution.

Further, the method may further include a tertiary washing step of removing the ingredients or residues of the welding solution adhering to the natural diamond gemstone 1 separated from the first-third sub-body 20c by using an acid solution.

According to the grinding step S300, the natural diamond gemstone 1 separated from the first-third sub-body 20c is welded with a second sub-body 30.

In this case, the lateral end portion of the machining tip 12 is welded with the front end portion of the second sub-body 30 in such a manner that the reference surface 12b is positioned at the top, and the base surface 12a is positioned at the bottom.

Thereafter, the edge portion of the machining tip 12 is ground by the grinding equipment 200 so that the edge portion of the machining tip 12 is rounded or rectangular-shaped, thereby forming a cutting blade at the edge portion of the machining tip 12.

In this case, when the natural diamond gemstone 1 is welded with the second sub-body 30, the natural diamond gemstone 1 may be welded through an electric resistance welding scheme performed by melting a metallic foil containing a great amount of silver or the welding agent 13 in the state of a paste.

The grinding equipment 200 may include a tool fixing part 310 to fix the second sub-body 30 and a grinding member 220 (e.g., metallic wheel) to grind the edge portion of the machining tip 12.

Since the grinding equipment 200 is generally known to those skilled in the art, the details thereof will be omitted.

After the grinding step S300 described above, the method may further include a quanternary washing step of removing the ingredients or residues of the welding solution adhering to the natural diamond gemstone 1 separated from the second sub-body 30 by using an acid solution.

According to the setting step S400, the machining tip 12 separated from the second sub-body 30 is temporarily installed in a super hard body 11, and the alignment state of the machining tip 12 is adjusted by using setting equipment 300.

Thereafter, in the setting step S400, the machining tip 12 is bonded with the super hard body 11 by using a normal-temperature bonding agent 15, thereby completing an endmill tool 10.

In this case, the normal-temperature bonding agent 15 may include one of epoxy resin, an instant adhesive, and typical adhesives.

The super hard body 11 is manufactured in the form of a cylindrical beam including metallic material, and has a concave coupling groove 11a lengthwise formed at the front end portion.

In addition, the rear end portion of the super hard body 11 is fixedly installed at the installation portion of the setting equipment 300.

In the state that the normal-temperature bonding agent 15 is introduced into the coupling groove 11a of the super hard body 11, the normal-temperature bonding agent 15 is coagulated at a high speed to fix the rear end portion of the machining tip 12 onto a metallic film 14, which will be described later, in the coupling groove 11a of the super hard body 11.

In other words, after inserting the rear end portion of the machining tip 12 and the metallic film 14, which are bonded with each other by using the welding agent 13, into the coupling groove 11a of the body 11, the normal-temperature bonding agent 15 may be injected into the gap of the coupling groove 11a.

In this case, the welding agent 13 to bond the first-first sub-body 20a with the natural diamond gemstone 1 may include a silver component or a lead component.

In the state that the above welding agent 13 is introduced between the machining tip 12 and the metallic film 14, the welding agent 13 bonds the bottom surface of the machining tip 12 to the top surface of the metallic film 14 through a high-temperature welding work (at the temperature of 900°C).

The setting equipment 300 may include a base (not shown), the tool fixing part 310, a first camera 320, and a second camera 330.

First, the tool fixing part 310 is installed at the upper portion of the base, and the endmill tool 10 having the machining tip 12 is rotatably coupled with a coupling portion 311 provided at the front portion of the tool fixing part 310.

The first camera 320 is provided at the front portion of the tool fixing part 310 while being spaced apart from the tool fixing part 310 to photograph a front surface image of the endmill tool 10 coupled with the coupling portion 311 so that the front alignment state of the machining tip 12 is displayed to the outside.

In addition, the first camera 320 may include a first camera fixing part (not shown) so that the first camera 320 moves back, forth, left, right, up, and right to adjust the focus of the front surface image of the machining tip 12.

The second camera 330 is provided at the upper portion of the tool fixing part 310 while being spaced apart from the tool fixing part 310 to photograph a top surface image and a lateral side image of the machining tip 12 coupled with the coupling portion 311, so that the alignment states of the top surface and the lateral side of the machining tip 12 are displayed to the outside.

In addition, the second camera 330 may include a second camera fixing part (not shown) so that the second camera 330 moves up and down to adjust the focuses of the top surface and lateral side images of the machining tip 12.

To this end, a pair of clamping parts 340 may include support arms 341, clamping rods 342, and support arm adjustment parts 343.

The support arms 341 are installed in the clamping parts 340, respectively, corresponding to the clamping parts 340 to support both end portions of the metallic film 14 at both sides of the tool fixing part 310, respectively.

In this case, both end portions of the metallic film 14 may extend with a longer length in a lateral direction. The extension portions of the both end portions of the metallic film 14 may be removed after the setting work has been finished.

In addition, the support arms 341 may support both end portions of the metallic film 14 in the state that the support arms 341 are right angled with respect to the machining tip 12.

In this case, one end portions of the support arms 341 supporting both end portions of the metallic film 14 may have the shape of a pin, which has a diameter gradually reduced toward the end portion thereof, to support both end portions of the metallic film 14 having areas that are not wide.

Each clamping rod 342 may be right angled with respect to each support arm 341 while supporting the support arm 341 at a predetermined height.

Each support arm adjustment part 343 may be installed at the lateral side of the clamping part 340 and may finely adjust the position of the clamping rod 342 through the forward and reverse directional rotation.

In this case, the support arms 341 fixed onto the clamping rods 342 may fixedly support both end portions of the metallic film 14 or may be spaced apart from both end portions of the metallic film 14.

In this case, the setting step S400 may include a body installing step S410, a film welding step S420, a fixing step S430, an adjusting step S440, and a bonding step S450.

First, according to the body installing step S410, the super hard body 11 is installed in the tool fixing part 310 of the setting equipment 300.

According to the film welding step S420, the metallic film 14 is welded with the lower end portion of the machining tip 12 by using welding equipment (not shown).

According to the fixing step S430, the assembly of the machining tip 12 and the metallic film 14 is inserted and positioned in the coupling groove 11a of the super hard body 11 installed in the tool fixing part 310 of the setting equipment 300.

According to the adjusting step S440, the alignment states of the front surface (X axis), the top surface (Y axis), and the lateral side (Z axis) of the machining tip 12 are monitored to adjust the alignment error of the machining tip 12.

To this end, the adjusting step S440 may include an X axis inspection step, a Y axis inspection step, and a Z axis inspection step.

First, according to the X axis inspection step, the front surface image of the machining tip 12 coupled with the coupling portion 311 is photographed, so that the front alignment state of the machining tip 12 is displayed to the outside.

According to the Y axis inspection step, the top surface image of the machining tip 12 is photographed, so that the alignment state of the top surface of the machining tip 12 is displayed to the outside.

According to the Z axis inspection step, the lateral side image of the machining tip 12 is photographed, so that the alignment state of the lateral side of the machining tip 12 is displayed to the outside.

In this case, a worker may monitor the alignment states of the front surface (X axis), the top surface (Y axis), and the lateral side (Z axis) of the machining tip 12 while adjusting the alignment error of the machining tip 12.

According to the bonding step S450, the machining tip 12 and the metallic film 14, the alignment error of which is adjusted, are bonded with the super hard body 11 by using the normal-temperature bonding agent 15 at the normal temperature.

In this case, the metallic film 14 is bonded with the lower end portion of the machining tip 12 by the high-temperature welding agent 13 which will be described later. In this state, the metallic film 14 and the machining tip 12 are inserted into the coupling groove 11a formed in the front end portion of the super hard body 11.

In this case, in the state that the metallic film 14 is bonded with the lower end portion of the machining tip 12, the metallic film 14 supports one side of the machining tip 12 in the coupling groove 11a while pressing the machining tip 12.

In other words, since the machining tip 12 supported and pressed by the metallic film 14 adheres to one side of the inner peripheral surfaces of the coupling groove 11a, the machining tip 12 may be easily out of the coupling groove 11a.

The metallic film 14 may be fabricated by using one of gold (Au), silver (Ag), copper (Cu), titanium (Ti), and a super hard alloy (WC-Co) obtained through the combination thereof, in order to improve weldability or machineability.

In addition, the thicknesses between the top and bottom of the metallic film 14 may be variously formed. However, preferably, the thicknesses between the top and bottom of the metallic film 14 may be in the range of 0.1 mm to 0.3 mm.

In addition, the bottom surface of the metallic film 14 may have a wedge shape so that the metallic film 14 is not moved when the metallic film 14 is inserted into the coupling groove 11a.

Meanwhile, the front alignment state of the machining tip 12 may be displayed to the outside by using the first camera 320 of the setting equipment 300, and the alignment state of the top surface of the machining tip 12 may be displayed to the outside by using the second camera 330 of the setting equipment 300.

The alignment state of the lateral side of the machining tip 12 having the direction changed by 90° through the rotation of the tool fixing part 310 may be displayed to the outside by using the second camera 330.

To this end, the first camera 320 may further include an X axis monitor 321 in order to display the front surface image of the machining tip 12 to a worker at the outside.

In the X axis monitor 321, a first coordinate 321a is formed in order to check the X axis alignment error about the central axis line of the machining tip 12.

The first coordinate 321a may have the shape in which circles are equally expanded about the central line.

In other words, a user can recognize by using the naked eyes that the top surface of the cutting blade 12a of the machining tip 12 coupled with the front end portion of the endmill tool 10 is inclined up, down, left, or right with respect to the central line of the first coordinate 321a.

The second camera 330 may further include Y and Z axis monitors 321 and 332 in order to display the top surface image and the lateral side image of the machining tip 12 to the worker at the outside.

That is to say, in the Y axis monitor 331, a second coordinate 331a is formed in order to check the Y axis alignment error about the central axis line of the machining tip 12. In the Z axis monitor 332, a third coordinate 332a is formed in order to check the Z axis alignment error about the central axis line of the machining tip 12.

The second and third coordinates 331a and 332a may have the shapes in which circles are equally expanded about the central line.

In other words, the user can recognize by using the naked eyes that the centers of the second and third coordinates 331a and 332a are matched with the center of the machining tip 12 coupled with the front end portion of the endmill tool 10.

The above first and second cameras 330 and 340 may include charge coupled device (CCD) cameras having the resolution of 1.25 µm/pixel and at least 4 times optical magnification.

Meanwhile, the method may further include a cutting step of removing the protrusion of the metallic film 14 protruding out of the machining tip 12 after the bonding step S450.

In addition, the method may further include a direction changing step of rotating the endmill tool 10 by 90° in order to photograph the lateral side image of the machining tip 12 after the step of displaying the alignment state of the top surface of the machining tip 12 to the outside.

In addition, preferably, the method further includes a final inspection step of inspecting the manufacturing degree of the endmill tool 10 after a tool assembling step.

The endmill tool 10, which has been completely manufactured through the above steps, includes the super hard body 11, the machining tip 12, the high-temperature welding solution 13, the metallic film 14, and the normal-temperature bonding agent 15.

The super hard body 11 is manufactured in the form of a cylindrical beam including metallic material and has the concave coupling groove 11a lengthwise formed at the front end portion of the super hard body 11.

In addition, the rear end portion of the super hard body 11 is fixedly installed in the installation portion of cutting equipment, and the like.

The machining tip 12 is provided at the front end portion thereof with the cutting blade 12a to cut a workpiece, and the rear end portion of the machining tip 12 is inserted into the coupling groove 11a formed at the front end portion of the super hard body 11.

The endmill tool 10 is applicable to a nano/micro cutting process utilizing an existing superprecision machine for machining an aspheric lens as well as a typical machine.

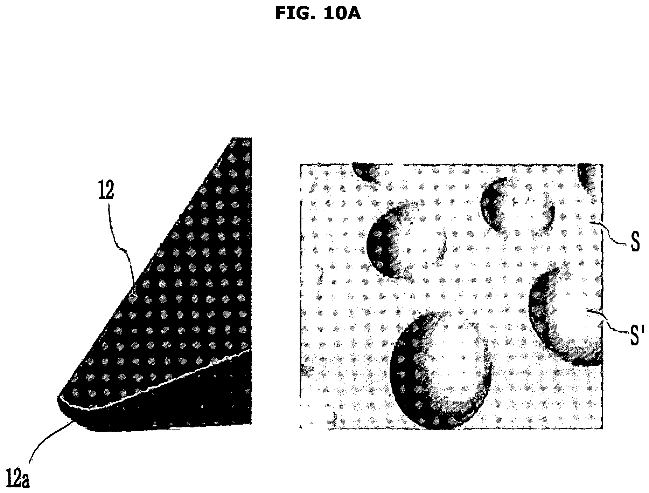

For example, when the cutting blade of the machining tip 12 is manufactured in a round shape as shown in FIG. 10a, a surface S' of a workpiece S may be machined in the round shape (lens shape).

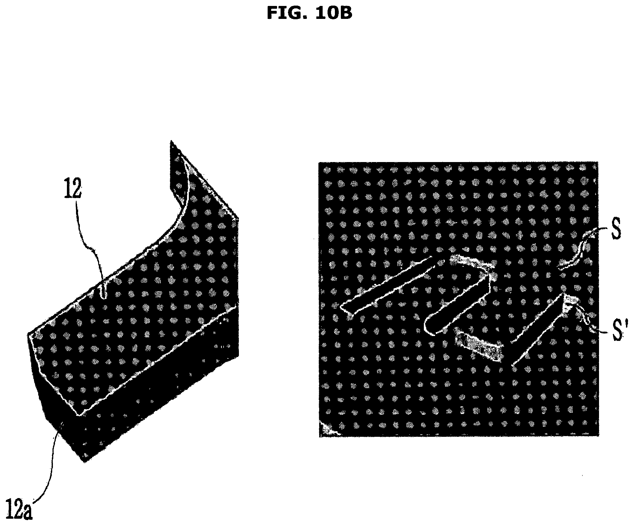

Alternatively, when the cutting blade of the machining tip 12 is manufactured in a rectangular shape as shown in FIG. 10b, a surface S' of a workpiece S may be machined in the rectangular shape.

In addition, in the future, when the application range of the nano/micro cutting process is enlarged to a bio-medical semiconductor, or a micro-machining field, the natural diamond-endmill tool 10 is used for a typical machine such as a conventional machining center (MC), so that a 3D-shaped circular groove or a 3D-shaped rectangular groove can be machined, or a sharp edge can be obtained through a mechanical machining work.

As a result, according to the present invention, after forming the reference surface 12b and the base surface 12a of a natural diamond material having a single crystalline structure through the abrading process, a process of grinding the edge portion of the machining tip 12 in the round shape or the rectangular shape is subsequently performed, thereby enhancing the degree of the machining precision of the machining tip 12, and the machining tip 12 can be manufactured by utilizing existing equipment, so that the manufacturing cost can be reduced.

In addition, a 3D-shaped round groove or rectangular groove can be machined or a sharp edge portion can be obtained through a mechanical machining process, so that the present invention can more increase an economical advantage or the work efficiency as compared with those of a semiconductor manufacturing process technology.

In addition, after welding the metallic film 14 and the machining tip 12 installed in the sub-body with each other, the assembly of the metallic film 14 and the machining tip 12 are bonded with the super hard body 11 through a normal-temperature coagulation scheme, so that the interference can be minimized when performing the abrading or grinding process to form the machining tip 12.

In addition, the alignment state of the machining tip 12 on X, Y, and Z axes can be checked. If the alignment error occurs, the machining tip 12 is finely adjusted, so that the alignment error value can be compensated. Accordingly, the waste of the cost resulting from the machining error and the machining failure can be prevented, so that the reliability of the machining process can be ensured.

Although the method of manufacturing the endmill tool according to the embodiments of the present invention has been described in detail, it is natural that various modifications can be made without departing from the scope of the present invention.

Therefore, the scope of the present invention is not limited to the above embodiment, and is determined by the accompanying claims and equivalents thereof.

## Claims

1. A method of manufacturing an endmill tool, the method comprising:
detecting a crystal direction of a selected natural diamond gemstone (1) by inspecting a structure of the selected natural diamond gemstone (1);
forming a lower base surface (12a) and an upper reference surface (12b) of the natural diamond gemstone (1) by performing an abrading process using an abrading equipment (100) after welding the natural diamond gemstone (1) with a first sub-body (20a, 20b, 20c);
grinding an edge portion of the natural diamond gemstone (1) by using a grinding equipment (200) after welding a machining tip (12), which is separated from the first sub-body (20a, 20b, 20c), with a second sub-body (30) to complete the machining tip (12) having a cutting blade;
and
temporarily installing the machining tip (12), which is separated from the second sub-body (30), in a super hard body (11) installed in a setting equipment (300), adjusting an alignment state of the machining tip (12), and bonding the machining tip (12) with the super hard body (11) by using a normal-temperature bonding agent (15) through a normal-temperature coagulation scheme to complete the endmill tool.

2. The method of claim 1, wherein the forming of the lower base surface and the upper reference surface of the natural diamond gemstone comprises:
forming a basic surface by abrading a top surface of the natural diamond gemstone after welding the natural diamond gemstone with a first-first sub-body;
forming a base surface by abrading a bottom surface of the natural diamond gemstone after welding the basic surface of the natural diamond gemstone, which is separated from the first-first sub-body, with a first-second sub-body; and
forming a reference surface by abrading the basic surface after welding the base surface of the natural diamond gemstone, which is separated from the first-second sub-body, with a first-third sub-body.

3. The method of claim 2, further comprising:
primarily removing an ingredient of a welding solution adhering to the natural diamond gemstone by using an acid solution after forming the basic surface;
secondarily removing an ingredient of a welding solution adhering to the natural diamond gemstone by using an acid solution after forming the base surface;
tertiarily removing an ingredient or residues of a welding solution adhering to the natural diamond gemstone, which is separated from the first-third sub-body, by using an acid solution after forming the reference surface; and
quanternary-removing an ingredient of a welding solution adhering to the natural diamond gemstone by using an acid solution after grinding the edge portion of the natural diamond gemstone by using the grinding equipment.

4. The method of claim 1, wherein the temporarily installing of the machining tip, which is separated from the second sub-body, in the super hard body installed in the setting equipment comprises:
installing the super hard body in the setting equipment;
welding a metallic film with a lower end of the machining tip;
fixedly inserting an assembly of the machining tip and the metallic film into the super hard body installed in the setting equipment;
adjusting an alignment error of the machining tip by monitoring alignment states of a front surface, a top surface, and a lateral side of the machining tip; and
bonding the assembly of the machining tip and the metallic film, the alignment error of which is adjusted, with the super hard body by using the normal-temperature bonding agent at a normal temperature.

5. The method of claim 4, wherein the adjusting of the alignment error of the machining tip comprises:
X-axis inspecting to photograph a front surface image of the machining tip coupled with a coupling portion and display the alignment state of the front surface of the machining tip to an outside;
Y-axis inspecting to photograph a top surface image of the machining tip and display the alignment state of the top surface of the machining tip to the outside; and
Z-axis inspecting to photograph a lateral side image of the machining tip and display the alignment state of the lateral side of the machining tip to the outside.

6. The method of claim 4, further comprising cutting to remove a protrusion of the metallic film protruding out of the machining tip after bonding the assembly of the machining tip and the metallic film, the alignment error of which is adjusted, with the super hard body.

7. The method of claim 5, further comprising direction-changing to rotate the endmill tool by 90° in order to photograph the lateral side image of the machining tip after the Y-axis inspecting.

8. The method of claim 1, further comprising finally inspecting a manufacturing degree of the endmill tool after temporarily installing the machining tip, which is separated from the second sub-body, in the super hard body installed in the setting equipment.

## Patentansprüche

1. Verfahren zur Herstellung eines Schaftfräswerkzeugs, wobei das Verfahren aufweist:
Bestimmen einer Kristallrichtung eines ausgewählten natürlichen diamantenen Edelsteins (1) durch Überprüfen einer Struktur des ausgewählten natürlichen diamantenen Edelsteins (1);
Bilden einer unteren Grundfläche (12a) und einer oberen Bezugsfläche (12b) des natürlichen diamantenen Edelsteins (1) durch Durchführen eines Abschleifvorgangs unter Verwendung einer Abschleifvorrichtung, nach Verschweißen des natürlichen diamantenen Edelsteins (1) mit einem ersten Unterkörper (20a, 20b, 20c);
Schleifen eines Kantenabschnitts des natürlichen diamantenen Edelsteins (1) durch Verwenden einer Schleifvorrichtung, nach Verschweißen einer Bearbeitungsspitze (12), die von dem ersten Unterkörper (20a, 20b, 20c) getrennt vorliegt, mit einem zweiten Unterkörper (30), um die Bearbeitungsspitze (12) mit einem Schnittblatt fertigzustellen; und
zeitweise Montieren der Bearbeitungsspitze (12), die von dem zweiten Unterkörper (30) getrennt vorliegt, in einem superharten Körper (11), der in einer Fassungsvorrichtung montiert ist,
Einstellen eines Ausrichtungszustands der Bearbeitungsspitze (12), und
Verbinden der Bearbeitungsspitze (12) mit dem superharten Körper (11) durch Verwenden eines mittels Normaltemperatur-Koagulationsschema wirkenden Normaltemperatur-Haftmittels, um das Schaftfräswerkzeug fertigzustellen.

2. Verfahren nach Anspruch 1, wobei das Bilden der unteren Grundfläche und der oberen Bezugsfläche des natürlichen diamantenen Edelsteins aufweist:
Bilden einer Basisfläche durch Abschleifen einer oberen Fläche des natürlichen diamantenen Edelsteins nach Verschweißen des natürlichen diamantenen Edelsteins mit einem ersten-ersten Unterkörper;
Bilden einer Grundfläche durch Abschleifen einer unteren Fläche des natürlichen diamantenen Edelsteins nach Verschweißen der Basisfläche des natürlichen diamantenen Edelsteins, die von dem ersten-ersten Unterkörper getrennt vorliegt, mit einem ersten-zweiten Unterkörper; und
Bilden einer Bezugsfläche durch Abschleifen der Basisfläche nach Verschweißen der Grundfläche des natürlichen diamantenen Edelsteins, die von dem ersten-zweiten Unterkörper getrennt vorliegt, mit einem ersten-dritten Unterkörper.

3. Verfahren nach Anspruch 2, fernere aufweisend:
erstens Entfernen eines Bestandteils einer Schweißlösung, die an dem natürlichen diamantenen Edelstein haftet, durch Verwenden einer sauren Lösung nach Bilden der Basisfläche;
zweitens Entfernen eines Bestandteils einer Schweißlösung, die an dem natürlichen diamantenen Edelstein haftet, durch Verwenden einer sauren Lösung nach Bilden der Grundfläche;
drittens Entfernen eines Bestandteils oder Resten einer Schweißlösung, die an dem natürlichen diamantenen Edelstein haftet, die von dem ersten-dritten Unterkörper getrennt vorliegt, durch Verwenden einer sauren Lösung nach Bilden der Bezugsfläche; und
viertens Entfernen eines Bestandteils einer Schweißlösung, die an dem natürlichen diamantenen Edelstein haftet, durch Verwenden einer sauren Lösung, nach Schleifen des Kantenabschnitts des natürlichen diamantenen Edelsteins durch Verwenden der Schleifvorrichtung.

4. Verfahren nach Anspruch 1, wobei das zeitweise Montieren der Bearbeitungsspitze, die von dem zweiten Unterkörper getrennt vorliegt, in dem superharten Körper, der in der Fassungsvorrichtung montiert ist, aufweist:
Montieren des superharten Körpers in der Fassungsvorrichtung;
Verschweißen eines metallischen Films mit einem unteren Ende der Bearbeitungsspitze;
festes Einfügen eines Aufbaus der Bearbeitungsspitze und des metallischen Films in den superharten Körper, der in der Fassungsvorrichtung montiert ist;
Einstellen eines Fluchtungsfehlers der Bearbeitungsspitze durch Überwachen von Ausrichtungszuständen einer vorderen Fläche, einer oberen Fläche, und einer lateralen Seite der Bearbeitungsspitze; und
Verbinden des Aufbaus der Bearbeitungsspitze und des metallischen Films, deren Fluchtungsfehler eingestellt ist, mit dem superharten Körper durch Verwenden des Normaltemperatur-Haftmittels bei einer Normaltemperatur.

5. Verfahren nach Anspruch 4, wobei das Einstellen des Fluchtungsfehlers der Bearbeitungsspitze aufweist:
Überprüfen der X-Achse, wobei ein Bild der vorderen Fläche der Bearbeitungsspitze, die mit einem Verbindungsabschnitt verbunden ist, fotografiert wird und der Ausrichtungszustand der vorderen Fläche der Bearbeitungsspitze nach Außen angezeigt wird;
Überprüfen der Y-Achse, wobei ein Bild der oberen Fläche der Bearbeitungsspitze fotografiert wird und der Ausrichtungszustand der oberen Fläche der Bearbeitungsspitze nach Außen angezeigt wird; und
Überprüfen der Z-Achse, wobei ein Bild der lateralen Seite der Bearbeitungsspitze fotografiert wird und der Ausrichtungszustand der lateralen Seite der Bearbeitungsspitze nach Außen angezeigt wird.

6. Verfahren nach Anspruch 4, ferner aufweisend Schneiden zum Entfernen eines Vorsprungs des metallischen Films, der aus der Bearbeitungsspitze ragt, nach Verbinden des Aufbaus der Bearbeitungsspitze und des metallischen Films, deren Fluchtungsfehler eingestellt ist, mit dem superharten Körper.

7. Verfahren nach Anspruch 5, ferner aufweisend Ändern der Richtung, wobei das Schaftfräswerkzeug um 90° gedreht wird, um das Bild der lateralen Seite der Bearbeitungsspitze nach dem Überprüfen der Y-Achse zu fotografieren.

8. Verfahren nach Anspruch 1, ferner aufweisend schlussendliches Überprüfen eines Fertigungsgrads des Schaftfräswerkzeugs nach zeitweise Montieren der Bearbeitungsspitze, die von dem zweiten Unterkörper (30) getrennt vorliegt, in dem superharten Körper, der in der Fassungsvorrichtung montiert ist.

## Revendications

1. Procédé de fabrication d'un outil de fraisage, le procédé comprenant les étapes suivantes:
détecter une orientation de cristal d'un gemme de cristal naturel sélectionné (1) en inspectant une structure du gemme de cristal naturel sélectionné (1);
former une surface de base inférieure (12a) et une surface de référence supérieure (12b) du gemme de diamant naturel (1) en exécutant un procédé d'abrasion en utilisant un équipement d'abrasion (100) après le soudage du gemme de diamant naturel (1) avec un premier corps secondaire (20a, 20b, 20c);
meuler une partie de bord du gemme de diamant naturel (1) en utilisant un équipement de meulage (200) après le soudage d'une pointe d'usinage (12), qui est séparée du premier corps secondaire (20a, 20b, 20c), avec un second corps secondaire (30) afin de terminer la pointe d'usinage (12) comportant une lame de coupe; et
installer temporairement la pointe d'usinage (12), qui est séparée du second corps secondaire (30), dans un corps super dur (11) installé dans un équipement de réglage (300), ajuster un état d'alignement de la pointe d'usinage (12), et lier la pointe d'usinage (12) au corps super dur (11) en utilisant un agent de liaison à température normale (15) par l'intermédiaire d'un processus de coagulation à température normale pour terminer l'outil de fraisage.

2. Procédé selon la revendication 1, dans lequel la formation de la surface de base inférieure et de la surface de référence supérieure du gemme de diamant naturel comprend les étapes suivantes:
former une surface de base en abrasant une surface supérieure du gemme de diamant naturel après le soudage du gemme de diamant naturel avec un premier-premier corps secondaire;
former une surface de base en abrasant une surface inférieure du gemme de diamant naturel après le soudage de la surface de base du gemme de diamant naturel, qui est séparé du premier-premier corps secondaire, avec un premier-second corps secondaire; et
former une surface de référence en abrasant la surface de base après le soudage de la surface de base du gemme de diamant naturel, qui est séparé du premier-second corps secondaire, avec un premier-troisième corps secondaire.

3. Procédé selon la revendication 2, comprenant en outre les étapes suivantes:
premièrement, retirer un ingrédient d'une solution de soudage qui adhère au gemme de diamant naturel en utilisant une solution acide après la formation de la surface de base;
deuxièmement, retirer un ingrédient d'une solution de soudage qui adhère au gemme de diamant naturel en utilisant une solution acide après la formation de la surface de base;
troisièmement, retirer un ingrédient ou des résidus d'une solution de soudage qui adhère au gemme de diamant naturel, qui est séparé du premier-troisième corps secondaire, en utilisant une solution acide après la formation de la surface de référence; et
quatrièmement, enlever un ingrédient d'une solution de soudage qui adhère au gemme de diamant naturel en utilisant une solution acide après le meulage de la partie de bord du gemme de diamant naturel en utilisant l'équipement de meulage.

4. Procédé selon la revendication 1, dans lequel l'installation temporaire de la pointe d'usinage, qui est séparée du second corps secondaire, dans le corps super dur installé dans l'équipement de réglage, comprend les étapes suivantes:
installer le corps super dur dans l'équipement de réglage;
souder un film métallique à une extrémité inférieure de la pointe d'usinage;
insérer fixement un ensemble de la pointe d'usinage et du film métallique dans le corps super dur installé dans l'équipement de réglage;
corriger une erreur d'alignement de la pointe d'usinage en surveillant des états d'alignement d'une surface avant, d'une surface supérieure et d'un côté latéral de la pointe d'usinage; et
lier l'ensemble de la pointe d'usinage et du film métallique, dont l'erreur d'alignement est corrigée, avec le corps super dur en utilisant l'agent de liaison à température normale à une température normale.

5. Procédé selon la revendication 4, dans lequel la correction de l'erreur d'alignement de la pointe d'usinage comprend les étapes suivantes:
inspecter l'axe X afin de photographier une image de la surface avant de la pointe d'usinage couplée à une partie de couplage et afficher l'état d'alignement de la surface avant de la pointe d'usinage à l'extérieur;
inspecter l'axe Y afin de photographier une image de la surface supérieure de la pointe d'usinage et afficher l'état d'alignement de la surface supérieure de la pointe d'usinage à l'extérieur; et
inspecter l'axe Z afin de photographier une image du côté latéral de la pointe d'usinage et afficher l'état d'alignement du côté latéral de la pointe d'usinage à l'extérieur.

6. Procédé selon la revendication 4, comprenant en outre une coupe pour enlever une saillie du film métallique qui fait saillie hors de la pointe d'usinage après la liaison de l'ensemble de la pointe d'usinage et du film métallique, dont l'erreur d'alignement est corrigée, avec le corps super dur.

7. Procédé selon la revendication 5, comprenant en outre un changement de direction pour faire tourner l'outil de fraisage de 90° dans le but de photographier l'image du côté latéral de la pointe d'usinage après l'inspection de l'axe Y.

8. Procédé selon la revendication 1, comprenant en outre l'inspection finale d'un degré de fabrication de l'outil de fraisage après l'installation temporaire de la pointe d'usinage, qui est séparée du second corps secondaire, dans le corps super dur installé dans l'équipement de réglage.
